(19) **Europäisches Patentamt**

**European Patent Office**

**Office européen des brevets**

(11) Numéro de publication: **0 115 725**
**A1**

# (12) DEMANDE DE BREVET EUROPEEN

(21) Numéro de dépôt: **83402488.7**

(22) Date de dépôt: **20.12.83**

(51) Int. Cl.³: **G 02 B 5/16**, G 02 B 5/172

---

(30) Priorité: **28.12.82 FR 8221870**

(71) Demandeur: **LIGNES TELEGRAPHIQUES ET TELEPHONIQUES L.T.T., 1, rue Charles Bourseul, F-78702 Conflans-Ste-Honorine (FR)**

(43) Date de publication de la demande: **15.08.84**
**Bulletin 84/33**

(72) Inventeur: **De Vecchis, Michel, THOMSON-CSF SCPI 173, bld Haussmann, F-75379 Paris Cedex 08 (FR)**
Inventeur: **Hulin, Jean-Pierre, THOMSON-CSF SCPI 173, bld Haussmann, F-75379 Paris Cedex 08 (FR)**

(84) Etats contractants désignés: **AT BE CH DE GB IT LI LU NL SE**

(74) Mandataire: **Benoit, Monique et al, THOMSON-CSF SCPI 173, Bld Haussmann, F-75379 Paris Cedex 08 (FR)**

---

㊵ **Câble optique de raccordement multipoint pour la distribution d'informations, son procédé de fabrication et son utilisation.**

㊷ L'invention a pour objet un câble optique assurant la distribution d'informations en de multiples points.

Il comporte un support (52) cylindrique rainuré et des fibres optiques (54) disposées librement dans les rainures (53), l'une au moins des fibres étant libre hors de sa rainure sur une longueur prédéfinie (D) et recouverte d'une gaine (57).

Application aux réseaux de distribution d'informations par fibres optiques.

EP 0 115 725 A1

1

## CABLE OPTIQUE DE RACCORDEMENT MULTIPOINT
## POUR LA DISTRIBUTION D'INFORMATIONS, SON PROCEDE
## DE FABRICATION ET SON UTILISATION

La présente invention concerne un câble optique assurant la distribution d'informations en des points multiples dans le cadre d'un réseau de distribution par fibres optiques.

Un réseau de distribution, notamment lorsqu'il utilise des fibres optiques, comporte généralement un réseau de transport d'informations aboutissant à des stations terminales, à partir de chacune desquelles sont distribuées à chaque abonné du réseau les informations transportées par celui-ci. La distribution à partir de la station terminale peut se concevoir soit de façon unitaire, soit à l'aide de câbles de distribution, optiques par exemple. Lorsque le nombre d'abonnés est important, la première solution est manifestement impraticable. Dans ce cas, on utilise des câbles de raccordement assurant la distribution de l'information à un certain nombre d'abonnés, par exemple des abonnés situés dans un même immeuble, et il peut être avantageux d'utiliser le même type de câble que celui qui est utilisé dans le réseau de transport lui-même.

Dans le cas où le réseau de transport utilise des fibres optiques, celles-ci sont en général réunies en un ou plusieurs câbles ou éléments de câble de structure bien connue, telle que la structure dite "cylindrique rainurée" décrite par exemple dans les brevets n° 77-04699 (n° de publication 2 381 326) et 78-06598 (n° de publication 2 419 524) au nom de LTT. Cette structure comporte principalement un support cylindrique rainuré et des fibres optiques placées librement dans les rainures, où elles sont maintenues par un rubanage ou analogue. Plusieurs structures élémentaires de ce type peuvent être réunies pour constituer un câble, généralement recouvert d'une gaine de protection. Lorsqu'on veut utiliser ce type de câble pour la partie distribution, c'est-à-dire la partie en aval d'une station terminale, il est nécessaire d'opérer des dérivations sur ce

2

câble qui s'effectuent en général sur site, après installation du câble. Chacune des opérations de dérivation consiste à blesser le câble, à dégager de leurs protections les fibres (ou la fibre) à dériver, à les sortir de leur rainure puis à reconstituer la protection, par surmoulage par exemple. En pratique, l'opération de dérivation est très délicate du fait que les conditions d'intervention sur site sont toujours précaires, et que dans le cas de casse d'une ou plusieurs fibres, la réparation n'étant pas toujours possible, on peut être conduit à changer la totalité du câble de distribution : on est amené ainsi à répéter les opérations de dérivation qui auraient déjà pu être réalisées. En outre, il se pose un problème de repérage des fibres qui doivent être dérivées parmi les fibres portées par le câble de distribution.

La présente invention a pour objet la réalisation d'un tel câble de distribution, du type cylindrique rainuré, dans lequel la dérivation des fibres du câble est réalisée lors de la fabrication du câble. Cela permet d'éviter l'opération sur site, minimise considérablement les risques d'incidents de câblage au moment de l'installation, ainsi que les risques d'erreurs dans le repérage des fibres.

Plus précisément, l'invention a pour objet un câble optique de raccordement multipoint pour la distribution d'informations, comportant un élément de support (52) sensiblement cylindrique et rainuré, des fibres optiques (54) constituant un moyen de transmission d'informations, disposées librement dans les rainures (53), des moyens de maintien (55) des fibres dans les rainures, et au moins une fibre libre hors de sa rainure sur une longueur prédéfinie, permettant ledit raccordement en un point.

L'invention a également pour objet un procédé de fabrication d'un câble optique de raccordement multipoint, ledit câble comportant un support (52) sensiblement cylindrique et rainuré et des fibres optiques (54) disposées librement dans les rainures (53), comportant les étapes suivantes :

- la mise en place d'une première série de fibres dans les rainures, fibres dont la longueur est égale à celle du support ;

- la mise en place d'une longueur prédéfinie de fibre optique, inférieure à celle du support, dans au moins une des rainures ;

- la mise en place des moyens de maintien (55) des fibres dans les rainures.

L'invention a encore pour objet une utilisation de ce câble optique de raccordement.

L'invention sera mieux comprise à l'aide de la description suivante, donnée à titre d'exemple non limitatif et illustrée par les dessins annexés qui représentent :

- la figure 1, le schéma d'un réseau de distribution ;

- la figure 2, une vue en coupe d'un schéma de réalisation d'un câble optique de type cylindrique rainuré ;

- la figure 3, une vue schématique longitudinale d'un mode de réalisation d'un câble de raccordement selon l'invention ;

- la figure 4, un diagramme représentant les étapes du procédé selon l'invention ;

- la figure 5, un schéma d'un mode de mise en oeuvre du procédé selon l'invention.

Sur ces différentes figures, d'une part les mêmes références se rapportent aux mêmes éléments et, d'autre part, l'échelle réelle n'a pas été respectée pour la clarté de l'exposé.

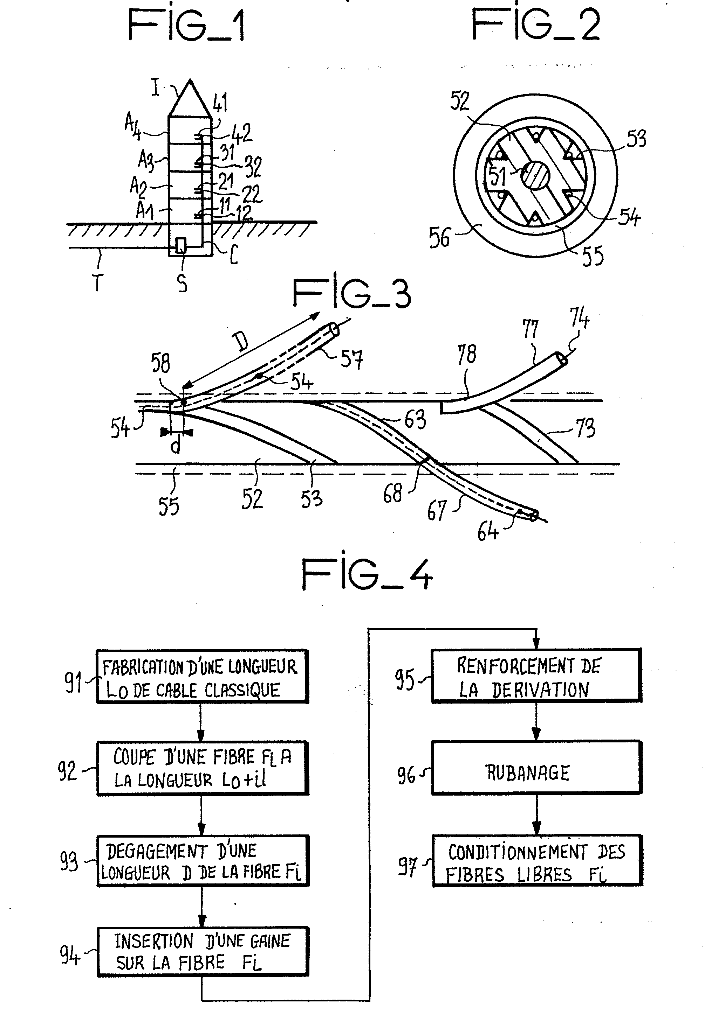

Sur la figure 1, on a donc schématisé un réseau de distribution comportant, reliés entre eux, un réseau de transport T, une station terminale S et un câble de distribution C, assurant la distribution de l'information reçue du réseau T à un certain nombre d'abonnés (sur la figure ; $A_1$ à $A_4$), situés à titre d'exemple dans un même immeuble I.

Le réseau de transport T est par exemple un câble optique du type cylindrique rainuré, du type représenté en section sur la figure 2.

La structure de la figure 2 comporte un support 52 de forme sensiblement cylindrique, présentant à sa périphérie un certain nombre de rainures 53, de préférence hélicoïdales, à pas simple ou alterné. Le support cylindrique 52, constitué par exemple par une matière plastique, peut être renforcé mécaniquement par un élément longitudinal 51, métallique par exemple. Dans les rainures 53 sont disposées une ou plusieurs fibres optiques 54.

Le câble comporte encore des moyens de fixation des fibres dans les rainures, constitués par exemple par un rubanage 55. Enfin, le câble est terminé de préférence par une gaine 56, par exemple en matière plastique épaisse, constituant une protection mécanique et chimique.

Il est à noter qu'un câble optique peut être constitué par une seule structure élémentaire, dite élément de câble, comportant les éléments 51 à 55, ou par plusieurs de ces structures élémentaires, l'ensemble étant ensuite recouvert par la gaine 56.

Egalement, on a représenté sur la figure 2 une structure comportant six rainures mais ce nombre n'est pas critique et il est couramment réalisé des structures à dix rainures.

Sur la figure 1, le câble de distribution C est de préférence également constitué comme représenté figure 2 et comporte, dans l'exemple de la figure 1, huit fibres optiques, deux d'entre elles étant affectées à chacun des abonnés, à savoir des fibres 11 et 12 pour l'abonné $A_1$, 21 et 22 pour l'abonné $A_2$, 31 et 32 pour l'abonné $A_3$ et 41 et 42 pour l'abonné $A_4$.

Selon l'invention, les dérivations nécessaires au niveau de chaque abonné sont réalisées lors de la fabrication du câble, celui-ci se présentant alors comme représenté schématiquement sur la figure 3.

Sur cette figure, on distingue le support cylindrique 52 et trois de ses rainures repérées respectivement 53, 63 et 73. En un point 58 de la rainure 53 est réalisée une dérivation de la fibre optique 54 initialement contenue dans cette rainure ; la fibre 54 est protégée sur sa longueur (D) située hors du câble par une gaine 57 qui pénètre dans la rainure sur une distance $\underline{d}$, ceci pour assurer une continuité de protection de la fibre et éviter les contraintes ou les ruptures au point 58. A titre d'exemple, la distance $\underline{d}$ peut être de l'ordre de quelques centimètres et la distance D de l'ordre de quelques mètres.

De la même manière en un point 68, on a réalisé une dérivation de la fibre 64 contenue dans la rainure 63 ; la fibre 64 est également protégée par une gaine, repérée 67. De la même manière encore, en un point 78 on a réalisé une dérivation similaire d'une fibre 74 protégée par une gaine 77 hors de sa rainure 73. Chacune des gaines est maintenue dans la rainure, comme la fibre elle-même, par le rubanage 55.

Dans une variante de réalisation (non représentée), il est prévu un renforcement de la protection de la fibre au niveau de chacune des dérivations ; ce renforcement peut être réalisé par exemple à l'aide de pièces encliquetables, enserrant le câble au droit de la dérivation (58, 68, 78).

Sur la figure 3, on a représenté trois points de dérivation (58, 68 et 78) répartis à la périphérie du câble ; bien entendu, il est possible de réaliser plusieurs dérivations (par exemple deux, afin d'obtenir les deux fibres nécessaires à un même abonné) au niveau d'une même section droite du câble.

La figure 4 illustre les différentes étapes du procédé selon l'invention.

La première étape (91) consiste à fabriquer une longueur déterminée $L_o$ de câble optique de façon classique, telle que décrite à titre d'exemple dans le brevet français n° 77-12674 (n° de publication 2 388 931) au nom de LTT.

La seconde étape, repérée 92, consiste à couper au moins une fibre $(F_i)$ à une longueur déterminée $L_o + il$.

La troisième étape (93) consiste à dégager la longueur D désirée de la fibre $F_i$ hors de sa rainure (voir figure 3).

La quatrième étape (94) consiste à enfiler une gaine protectrice autour de la fibre $F_i$, pénétrant dans la rainure sur la longueur $\underline{d}$ (voir figure 3).

La cinquième étape (95), qui n'est pas nécessaire dans tous les cas, consiste à réaliser un renforcement de la structure au niveau de la dérivation comme mentionné ci-dessus.

La sixième étape (96) est la pose des moyens de maintien des fibres et des gaines dans les rainures ; cette opération peut être un rubanage tel que les parties gainées de fibres soient maintenues libres (par exemple par coupe du ruban au niveau de chaque dérivation) sauf sur la longueur d (voir figure 3).

La dernière étape (97) consiste à conditionner les fibres libres et gainées le long du câble ; cette étape est également optionnelle ; elle peut être réalisée par exemple par un deuxième rubanage ou par pose de clips, pour immobiliser les fibres dégagées le long du câble.

Il est bien entendu que les étapes 92 à 95 ont été décrites pour une seule fibre et qu'elles doivent être réalisées pour chacune des fibres à dériver.

Par ailleurs, dans une variante de réalisation, la fibre $F_i$ à dériver n'est pas coupée mais elle est préconditionnée sur son touret débiteur à la longueur voulue $(L_o + il)$, ce qui évite d'avoir à arrêter la fabrication pour couper la fibre.

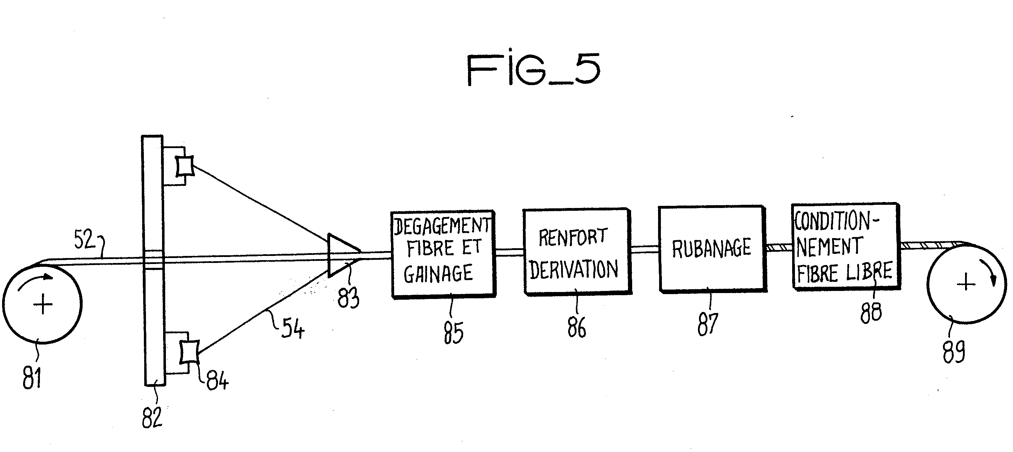

La figure 5 représente un mode de mise en oeuvre du procédé précédent.

Sur cette figure, on distingue un touret 81, débitant le support cylindrique rainuré 52 ; celui-ci passe au centre d'un plateau 82 qui porte des tourets 84 débitant les fibres optiques telles que 54. Celles-ci sont placées dans les rainures du support 52 à l'aide d'une tête de pose 83, telle que décrite par exemple dans les brevets français n° 77-12674 (n° de publication 2 388 931) ou 78-05833 (n° de publication 2 418 940) au nom de LTT. Le support 52 et les fibres qu'il porte passent ensuite dans un poste 85 où sont réalisés, manuellement ou automatiquement, le dégagement des fibres et leur gainage, puis, le cas échéant, dans un poste 86 où est réalisé le renfort des dérivations. Le support 52 et ses fibres rencontrent ensuite successivement un poste de rubanage 87 et éventuellement un poste 88 où est réalisé le conditionnement des fibres précédemment dégagées et gainées. L'ensemble est enfin stocké sur un touret récepteur 89.

Ces différentes étapes peuvent être réalisées manuellement ou automatiquement.

7

Il ressort donc de la description précédente qu'un tel câble optique de distribution présente de nombreux avantages par rapport à des dérivations réalisées sur site, et notamment :

- l'absence de blessures réalisées dans les protections du câble ;

- la possibilité d'avoir une longueur de fibre libre variable et, ce, indépendamment de la longueur du câble lui-même ou du pas de raccordement de deux abonnés ;

- la diminution du temps d'installation ;

- l'augmentation de la fiabilité du raccordement.

8

REVENDICATIONS

1. Câble optique de raccordement multipoint pour la distribution d'informations, comportant un élément de support (52) sensiblement cylindrique et rainuré, des fibres optiques (54) constituant un moyen de transmission d'informations, disposées librement dans les rainures (53), et des moyens de maintien (55) des fibres dans les rainures ; le câble étant caractérisé par le fait qu'il comporte au moins une fibre libre hors de sa rainure sur une longueur prédéfinie, permettant ledit raccordement en un point.

2. Câble selon la revendication 1, caractérisé par le fait qu'il comporte en outre, autour de ladite fibre libre hors de sa rainure, une gaine de protection (57, 67, 77).

3. Câble selon la revendication 2, caractérisé par le fait qu'une extrémité de la gaine de protection (57, 67, 77) est engagée dans ladite rainure (53, 63, 73) et y est maintenue par les moyens de maintien (55).

4. Câble selon l'une des revendications précédentes, caractérisé par le fait qu'il comporte en outre des moyens de renforcement au point de dérivation (58, 68, 78) où la fibre sort de sa rainure.

5. Câble selon l'une des revendications précédentes, caractérisé par le fait que les moyens de maintien (55) des fibres dans leur rainure comportent un rubanage.

6. Câble selon l'une des revendications 2 à 5, caractérisé par le fait que la fibre libre gainée est maintenue sur le câble par des moyens de conditionnement (88).

7. Procédé de fabrication d'un câble optique de raccordement

9

multipoint, ledit câble comportant un support (52) sensiblement cylindrique et rainuré et des fibres optiques (54) disposées librement dans les rainures (53), caractérisé par le fait qu'il comporte les étapes suivantes :

- la mise en place d'une première série de fibres dans les rainures, fibres dont la longueur est égale à celle du support ;

- la mise en place d'une longueur prédéfinie de fibre optique, inférieure à celle du support, dans au moins une des rainures, et dont l'extrémité est libre hors de sa rainure ;

- la mise en place des moyens de maintien (55) des fibres dans les rainures.

8. Procédé selon la revendication 7, caractérisé par le fait qu'il comporte en outre une étape de gainage (94) de l'extrémité de la fibre optique hors de sa rainure.

9. Procédé selon l'une des revendications 7 ou 8, caractérisé par le fait qu'il comporte en outre une étape de renfort (95) du point de dérivation où la fibre sort de sa rainure.

10. Utilisation d'un câble optique de raccordement dans un réseau de distribution par fibres optiques, ledit réseau comportant un réseau de transport (T) comportant des câbles optiques, au moins une station terminale (5) et des abonnés, ($A_1$ - $A_4$), ledit câble de raccordement étant connecté entre la station terminale et les abonnés, ladite utilisation étant caractérisée par le fait que le câble de raccordement est constitué par un câble selon l'une des revendications 1 à 6.

0115725

## FIG_1

## FIG_2

## FIG_3

## FIG_4

| | |
|---|---|
| 91 — FABRICATION D'UNE LONGUEUR Lo DE CABLE CLASSIQUE | 95 — RENFORCEMENT DE LA DERIVATION |
| 92 — COUPE D'UNE FIBRE Fi A LA LONGUEUR Lo+il | 96 — RUBANAGE |
| 93 — DEGAGEMENT D'UNE LONGUEUR D DE LA FIBRE Fi | 97 — CONDITIONNEMENT DES FIBRES LIBRES Fi |
| 94 — INSERTION D'UNE GAINE SUR LA FIBRE Fi | |

0115725

FIG_5

DEGAGEMENT FIBRE ET GAINAGE 85

RENFORT DERIVATION 86

RUBANAGE 87

CONDITIONNEMENT FIBRE LIBRE 88

89

81

52

82

83

84

54

Office européen
des brevets

**RAPPORT DE RECHERCHE EUROPEENNE**

EP 83 40 2438

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A,D | EP-A-0 004 486 (SALTT) <br> * revendications et figures * | 1 | G 02 B 5/16 <br> G 02 B 5/172 |
| | --- | | |
| A | GB-A-2 038 017 (S.T.C.) <br> * Résumé; figures * | 1 | |
| | ----- | | |

| | |
|---|---|
| | **DOMAINES TECHNIQUES RECHERCHES (Int. Cl. 3)** <br><br> G 02 B 5/16 |

Le présent rapport de recherche a été établi pour toutes les revendications

| Lieu de la recherche | Date d'achèvement de la recherche | Examinateur |
|---|---|---|
| LA HAYE | 11-04-1984 | PFAHLER R. |

OEB Form 1503. 03.82

BAD ORIGINAL